# EUROPÄISCHE PATENTSCHRIFT

(11) **EP 1 211 114 B1**
(45) Veröffentlichungstag und Bekanntmachung des Hinweises auf die Patenterteilung: **23.05.2007**
(21) Anmeldenummer: 01128201.9
(22) Anmeldetag: 28.11.2001
(51) Int. Cl.: B60J 7/22

(54) **Windschott**
Wind barrier
Pare-vent

(30) Priorität: 04.12.2000 DE 10061562
(43) Veröffentlichungstag der Anmeldung: 05.06.2002
(73) Patentinhaber: SCAMBIA INDUSTRIAL DEVELOPMENTS AKTIENGESELLSCHAFT, 9494 Schaan (LI)
(72) Erfinder: Dreher, Martin, 71696 Möglingen (DE); Mäurle, Hermann, 70619 Stuttgart (DE); Riehle, Jörg, 70439 Stuttgart (DE); Riehle, Hans, 71638 Ludwigsburg (DE)
(74) Vertreter: Hoeger, Stellrecht & Partner Patentanwälte

(56) Entgegenhaltungen:
- DE-A- 19 906 650
- DE-U- 29 913 249
- US-A- 5 707 099
- US-A- 5 899 521
- US-A- 6 092 860

## Beschreibung

Die Erfindung betrifft ein Windschott für ein Personenkraftfahrzeug mit Überrollbügel, umfassend Windschott-Flächenelemente und eine Trägervorrichtung für die Windschott-Flächenelemente, welche mindestens zwei in einem Abstand angeordnete Haltelaschen aufweist, die so angeordnet und ausgebildet sind, dass sie an den jeweiligen Bügelabschnitten des Überrollbügels zur Festlegung der Trägervorrichtung an dem Überrollbügel festlegbar sind.

Ein derartiges Windschott ist beispielsweise aus der gattungsbildenden DE 195 34 584 C1 oder der DE 196 32 352 A1 bekannt.

Ein Windschott, welches an einem Überrollbügel festgelegt ist, dient dazu, Insassen des Personenkraftfahrzeuges, welche vor dem Überrollbügel sitzen, vor rückwärts einströmender Luft zu schützen.

Davon ausgehend liegt der Erfindung die Aufgabe zugrunde, ein Windschott zu schaffen, welches auf einfache Weise an einem Überrollbügel festlegbar ist.

Diese Erfindung wird bei einem Windschott der eingangs genannten Art erfindungsgemäß dadurch gelöst, dass die Haltelaschen an dem Überrollbügel anlegbar sind und dass die Haltelasche so ausgebildet ist, dass ein korrespondierender Bügelabschnitt durch sie mindestens teilweise umgreifbar ist.

Dadurch, dass die Trägervorrichtung Haltelaschen aufweist, kann die Trägervorrichtung an einem Überrollbügel festgelegt werden, der nicht vorgerüstet zu sein braucht. Insbesondere braucht der Überrollbügel nicht mit Ausnehmungen zur Aufnahme der Trägervorrichtung versehen sein. Dadurch ist bei dem erfindungsgemäßen Windschott der Überrollbügel zum einen weniger anfällig gegenüber beispielsweise Schmutzablagerungen und dergleichen und andererseits wird der ästhetische Gesamteindruck durch Ausnehmungen oder dergleichen nicht gestört. Auch lassen sich vorgegebene Überrollbügel mit einem erfindungsgemäßen Windschott nachrüsten.

Erfindungsgemäß ist eine Haltelasche so ausgebildet, dass ein korrespondierender Bügelabschnitt durch sie mindestens teilweise umgreifbar ist. Dadurch lässt sich ein guter Halt der Trägervorrichtung an einem Überrollbügel erreichen und zwar insbesondere über Klemmkraftwirkung.

Das erfindungsgemäße Windschott lässt sich über die Haltelaschen auf einfache und schnelle Weise an einem Überrollbügel montieren und ebenso wieder leicht entfernen.

Dadurch, dass die Trägervorrichtung mindestens zwei in einem Abstand angeordnete Haltelaschen aufweist, ist es möglich, die Trägervorrichtung über Klemmkraftwirkung an dem Überrollbügel zu halten, das heißt es müssen keine Formschlusselemente zur Verbindung mit dem Überrollbügel vorgesehen werden. Die Haltelaschen sind dabei insbesondere starr ausgebildet, wobei sie aber eine bestimmte Elastizität aufweisen können, um eben eine klemmende Fixierung (beispielsweise in der Art eines Schnappverschlusses) zu ermöglichen.

Da die Haltelasche gewissermaßen um einen korrespondierenden Bügelabschnitt legbar ist, ist dadurch auch die Montage der Trägervorrichtung erleichtert, denn durch eine mindestens teilweise umlegbare Haltelasche an einem Bügelabschnitt ist eine "Referenzposition" bei der Montage geschaffen.

Eine Lasche kann dabei so ausgebildet sein, dass sie einen Überrollbügel so weit umgreifen kann, dass sie auch über einen Scheitelpunkt einer abgerundeten Oberfläche des Überrollbügels hinaus am Überrollbügel anlegbar ist.

Die Lasche ist vorzugsweise elastisch ausgebildet, um eine entsprechende Aufschiebbarkeit auf den Überrollbügel zu ermöglichen. Bei aufgeschobener Lasche stellt der den Scheitel bildende Bereich des Überrollbügels eine Sperre gegen die Loslösung der Lasche vom Überrollbügel weg dar.

Ganz besonders günstig ist es, wenn eine Haltelasche an die Abmessungen des Bügelabschnittes, an welchen sie angelegt werden soll, in ihrer Form angepasst ist. Dadurch ist für einen sicheren Halt der Trägervorrichtung an dem Überrollbügel gesorgt, wobei ein befriedigender ästhetischer Gesamteindruck erzielbar ist.

Bei einer fertigungstechnisch günstigen Ausführungsform ist eine Haltelasche rinnenförmig ausgebildet. Da ein Überrollbügel in der Regel Bügelelemente aufweist, welche rohrförmig ausgestaltet sind mit einer darauf angeordneten Verkleidung, lässt sich auf diese Weise ein mindestens teilweises Umgreifen des Bügelabschnitts durch eine Haltelasche auf einfache Weise erreichen.

Ganz besonders vorteilhaft ist es, wenn eine Haltelasche elastisch ausgebildet ist und insbesondere federnd ausgebildet ist. Dadurch ist erreichbar, dass in einer Festlegungsstellung eine Klemmkraft ausübbar ist, welche die Trägervorrichtung an dem Überrollbügel festlegt. Durch die elastische Ausbildung lässt sich die Festlegungsstellung auf einfache Weise unter Kraftaufwand zur elastischen Verformung erreichen, insbesondere ohne dass besondere Werkzeuge vorgesehen werden müssen.

Ganz besonders vorteilhaft ist es, wenn eine Haltelasche über eine Windschott-Flächenelement-Ebene der Trägervorrichtung hinausragt. Dadurch läßt sich das erfindungsgemäße Windschott über die Haltelaschen in Bügelelemente des Überrollbügels einsetzen, wobei dann die Windschott-Flächenelement-Ebene versetzt zu einer Ebene des Überrollbügels liegt. Insbesondere ist es dadurch nicht notwendig, die Trägervorrichtung an die spezielle Ausgestaltung des Überrollbügels anzupassen, das heißt beispielsweise an den Zwischenraum zwischen zwei Bügelelementen anzupassen, sondern die Anpassung muß nur gegenüber der Trägervorrichtung des Windschottes erfolgen.

Günstig ist es, wenn die mindestens zwei Haltelaschen an oder in der Nähe gegenüberliegender seitlichen Ende der Trägervorrichtung angeordnet sind. Dadurch lassen sich die zwei äußeren Haltelaschen an äußere Bügelabschnitte anlegen, wobei diese äußeren Bügelabschnitte insbesondere gegenüber liegen. Dadurch wiederum läßt sich eine gute Klemmkraftwirkung zur Festlegung der Trägervorrichtung an dem Überrollbügel erreichen.

Weist der Überrollbügel eine oder mehrere Bogenelemente auf, dann ist es besonders günstig, wenn eine Haltelasche so angeordnet und ausgebildet ist, daß sie an einer Innenbogenseite eines jeweiligen Bügelabschnitts des Bogenelementes anlegbar ist. Dadurch läßt sich eine Trägervorrichtung an den Bogenelementen in einer Festlegungsstellung verspannen. Insbesondere ist es dann sehr vorteilhaft, wenn die mindestens zwei Haltelaschen so an der Trägervorrichtung in einem Abstand angeordnet sind, daß ihre Flächenrichtungen bezüglich einer Anlagefläche an dem Überrollbügel jeweils entgegengesetzt nach außen weisen. Die Haltekräfte und insbesondere Klemmkräfte der Trägervorrichtung in der Festlegungsstellung der Trägervorrichtung weisen dann nach außen (von dem Fahrzeuginneren weg) und zwar an den jeweiligen Außenabschnitten der beiden Bügelelemente entgegengesetzt, so daß auf diese Weise eine hohe Klemmkraftwirkung erreichbar ist.

Bei einem Ausführungsbeispiel ist die Trägervorrichtung einteilig ausgebildet. Diese läßt sich auf einfache Weise lagern und auch montieren.

Günstig ist es dabei, wenn die Trägervorrichtung eine Rahmenstruktur aufweist, um so einerseits eine Gewichtsersparnis zu erzielen und andererseits um auf einfache Weise Windschott-Flächenelemente wie luftdurchlässige aber windundurchlässige Windabweiserbahnen aus einem Netz oder Gewebe zu halten.

Ganz besonders vorteilhaft ist es, wenn die Trägervorrichtung so ausgebildet ist, daß ihre Länge parallel zum Überrollbügel veränderbar ist. Es läßt sich dadurch eine platzsparende Lagerung des Windschotts erreichen, wenn die entsprechende Länge minimiert wird. Andererseits läßt sich solch eine Trägervorrichtung auf einfache Weise an einen Überrollbügel montieren, indem die Haltelaschen angesetzt werden, die Länge dann durch Kraftbeaufschlagung vergrößert wird, bis die Festlegungsstellung erreicht wird, und in dieser Festlegungsstellung insbesondere die Haltelaschen an entsprechenden Bügelabschnitten des Überrollbügels anlegen und auf diese eine Kraft ausüben und zwar an den jeweiligen Enden des Überrollbügels nach außen wirkend. Die Trägervorrichtung ist dann durch Klemmkraft an dem Überrollbügel festgehalten.

Konstruktiv besonders günstig ist es, wenn die Trägerstruktur zur Längenänderung ein oder mehrere Schwenkgelenke aufweist. Durch ein solches Schwenkgelenk lassen sich Teile der Trägerstruktur relativ zueinander verschwenken und die Trägerstruktur weist dadurch Stellungen auf, in denen ihre Länge minimiert ist (Aufbewahrungsstellung oder Lagerstellung) und eine Stellung, in welcher die Länge maximiert ist und in welcher die Trägervorrichtung an einem Überrollbügel durch Klemmkraft fixierbar ist (Festlegungsstellung). Die Montage einer solche Trägerstruktur an einem Überrollbügel läßt sich einfach und schnell bewirken. Weiterhin lassen sich Schwenkgelenke auf kostengünstige Weise derart robust ausbilden, daß ihre Funktionsfähigkeit auch auf einen längeren Zeitraum hinaus nicht beeinträchtigt wird.

Vorteilhafterweise ist ein Schwenkgelenk zumindest näherungsweise mittig an einer Rahmenstruktur der Trägervorrichtung angeordnet. Dadurch läßt sich einerseits in der Aufbewahrungsstellung eine minimale Länge der Trägervorrichtung herstellen und andererseits ist die Montage erleichtert, da die Festlegungsstellung durch symmetrische Kraftbeaufschlagung erreichbar ist.

Ganz besonders vorteilhaft ist es, wenn in einer Festlegungsstellung der Trägervorrichtung diese mittels der mindestens zwei Haltelaschen an dem Überrollbügel klemmend festlegbar ist.

Bei einer Variante einer Ausführungsform ist es vorgesehen, daß die Festlegungsstellung jenseits eines Totpunktes bezüglich einer Schwenkposition relativ zu einer schwenkbaren Teile der Trägervorrichtung liegt.

Günstig ist es, wenn die Festlegungsstellung verriegelbar ist. Dadurch ist die Festlegung der Trägervorrichtung an dem Überrollbügel fixierbar.

Bei einer Variante einer Ausführungsform ist zur Verriegelung der Festlegungsposition mindestens ein Rastelement vorgesehen, durch welches relativ zueinander bewegliche Teile einer Rahmenstruktur der Trägervorrichtung untereinander im wesentlichen unbeweglich koppelbar sind. Das Rastelement sperrt dadurch die Schwenkbewegung und damit ein Rückschwenken aus der Festlegungsstellung.

Bei einer konstruktiv einfachen Ausführungsform ist das Rastelement als Schwenkklappe ausgebildet. Eine solche Schwenkklappe wird in der Festlegungsstellung über benachbarte, relativ zueinander schwenkbare Rammteile gelegt und koppelt diese miteinander im wesentlichen unbeweglich, um so ihre relative Schwenkbewegung zueinander zu sperren.

Bei einer alternativen Variante ist das Rastelement als Rastschieber ausgebildet, welcher ebenfalls die Schwenkbewegung sperrt, wenn er in einer Raststellung ist.

Günstig ist es, wenn eine oder mehrere Streben zwischen einem oberen Rahmenteil und einem unteren Rahmenteil der Rahmenstruktur angeordnet sind. Diese Streben sorgen für eine Querstabilität des Windschottes quer zu einer Flächennormalen-Richtung der Windschott-Flächenelemente.

Bei einer Variante einer Ausführungsform ist eine Stützstrebe als Schwenkwelle eines Schwenkgelenks zur Längenänderung der Trägervorrichtung ausgebildet. Eine solche Stützstrebe hat auch den Vorteil, daß sie Schwenkgelenke in einem oberen Rahmenteil und einem unteren Rahmenteil koppeln kann, wodurch eine gute Schwenkführung erreichbar ist.

Bei einer weiteren Variante einer Ausführungsform, welche alternativ oder kumulativ sein kann, sind Stützstreben so angeordnet und ausgebildet, daß sie beim montierten Windschott im Bereich von Bügelabschnitten des Windschottes liegen. Solche Stützstreben sind dann bei montiertem Windschott relativ unauffällig und stören damit auch nicht den ästhetischen Gesamteindruck und insbesondere wird dadurch das Blickfeld des Fahrers nach hinten im Innenspiegel nicht behindert. Betrachtet man den Überrollbügel von einer der Montageseite des Windschotts abgewandten Seite, dann sind diese Stützstreben überhaupt nicht sichtbar.

Bei einem weiteren Ausführungsbeispiel umfaßt der Überrollbügel mindestens ein erstes und eine zweites beabstandetes Bogenelement und die Trägervorrichtung einer ersten Trägerstruktur, welche an dem ersten Bogenelement festlegbar ist, und eine zweite Trägerstruktur, welche an einem zweiten Bogenelement festlegbar ist. Es ist damit eine eigene Trägerstruktur für jedes Bogenelement vorgesehen, wobei sich in dem Zwischenraum zwischen den Bogenelementen entsprechende Windschott-Flächenelemente an der ersten Trägerstruktur und der zweiten Trägerstruktur selber montieren lassen.

Vorteilhafterweise ist durch eine Trägerstruktur ein Windschott-Flächenelement für das zugeordnete Bogenelement gehalten. Das Bogenelement selber weist eine Öffnung auf, in welche eine zugeordnete Trägerstruktur einsetzbar ist. Durch diese Öffnung des Bogenelementes selber können störende Luftströmungen aus diesem Bereich des Fahrzeugs zu Fahrzeuginsassen strömen. Das Windschott-Flächenelement, welches durch die entsprechende Trägerstruktur gehalten ist, verhindert derartige störende Luftströmungen zu Fahrzeuginsassen hin.

Vorteilhafterweise ist zwischen der ersten Trägerstruktur und der zweiten Trägerstruktur ein Träger für Windschott-Flächenelemente für den Zwischenraum zwischen den Bogenelementen festlegbar. Dadurch wird die optimale Funktion des Windschotts gewährleistet. Die Trägerstrukturen dienen dann als Haltevorrichtungen für den Träger.

Bei einer Variante einer Ausführungsform ist der Träger für den Zwischenraum zwischen den Bogenelementen scheibenförmig ausgebildet, beispielsweise als Plexiglasscheibe. Dies hat den Vorteil, daß zum einen ein guter Windschutz erreichbar ist und zum anderen die Sicht des Fahrers nach hinten nicht behindert ist.

Zur Fixierung einer Trägerstruktur an einem Bogenelement ist es besonders günstig, wenn eine Trägerstruktur gegenüberliegende Haltelaschen zu deren Festlegung an einem zugeordnetem Bogenelement aufweist und auch zur Festlegung eines Trägers zwischen beabstandeten Trägerstrukturen. Mittels solcher Haltelaschen läßt sich dann die Trägerstruktur an dem jeweiligen Bogenelement halten, beispielsweise über Klemmwirkung. Die Trägerstruktur kann dabei in einer Mittelebene von Bogenelementen oder versetzt dazu gehalten sein.

Insbesondere vorteilhaft ist es, wenn eine Haltelasche mit einer Nut versehen ist, welche so angeordnet und ausgebildet ist, daß ein Windschott-Flächenelement einschiebbar ist. In solche Nuten kann dann der Träger für Zwischenraum-Windschott-Flächenelemente eingesetzt werden, welche gegen den Eintritt von Luftströmungen in den Zwischenraum zwischen Bogenelementen schützen sollen. Die Anordnung der Nut an der Lasche (einstückig oder relativ zu dieser fixiert) bestimmt dann die Lage des Trägers am Überrollbügel.

Günstigerweise ist die Nut und der zugeordnete Träger so ausgebildet, daß bei an dem Überrollbügel montierter Trägervorrichtung die Verschieblichkeit des Trägers in Richtung Fahrzeuginneres begrenzt ist und insbesondere nach unten begrenzt ist. Es läßt sich dadurch das Windschott auf einfache Weise montieren, da die endgültige Stellung des Trägers vorgegeben ist.

Günstig ist es auch, wenn eine Verriegelungsvorrichtung vorgesehen ist, durch welche die Verschiebung des Trägers nach oben begrenzbar ist, um so den Träger sicher an dem Überrollbügel fixieren zu können. Beispielsweise kann die Verriegelungsvorrichtung eine oder mehrere Rastnasen umfassen, welche an dem Träger gebildet sind und die in Rastausnehmungen an den Trägerstrukturen eingreifen können.

Die nachfolgende Beschreibung bevorzugter Ausführungsformen dient im Zusammenhang mit der Zeichnung der näheren Erläuterung der Erfindung. Es zeigen:
- Figur 1: eine perspektivische Ansicht eines Personenkraftfahrzeuges mit einem Überrollbügel, an welchem das erfindungsgemäße Windschott festlegbar ist;
- Figur 2: ein erstes Ausführungsbeispiel eines Windschottes vor der Montage an einem Überrollbügel;
- Figur 3: das Windschott gemäß Figur 2 nach Montage an dem Überrollbügel;
- Figur 4: eine Variante des Windschottes gemäß Figur 3;
- Figur 5: eine weitere Variante einer Ausführungsform eines Windschottes;
- Figur 6: eine schematische Ansicht einer Verriegelungsvorrichtung zur Festlegung eines erfindungsgemäßen Windschottes an einem Überrollbügel;
- Figur 7: ein zweites Ausführungsbeispiel eines Windschottes in perspektivischer Ansicht, wobei das Windschott an einem Überrollbügel montiert ist;
- Figur 8: eine schematische Darstellung bezüglich der Montage des Windschottes gemäß Figur 7 und
- Figur 9: eine Trägerstruktur des Windschottes gemäß Figur 7 vor der endgültigen Montage an einem Bügelelement eines Überrollbügels.

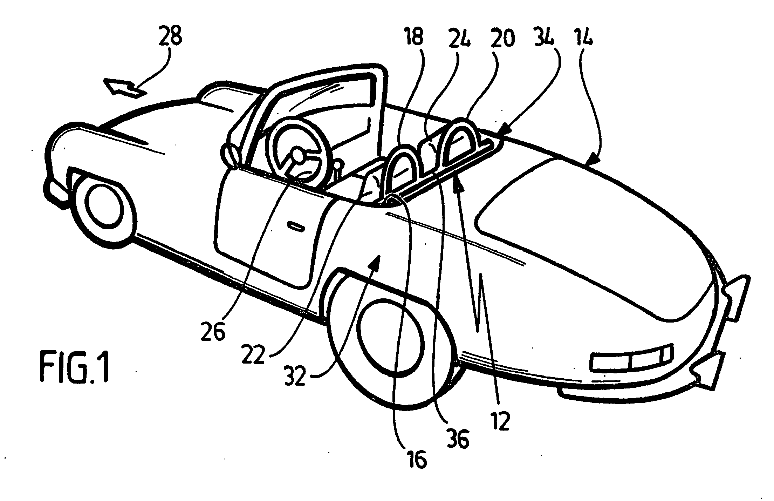

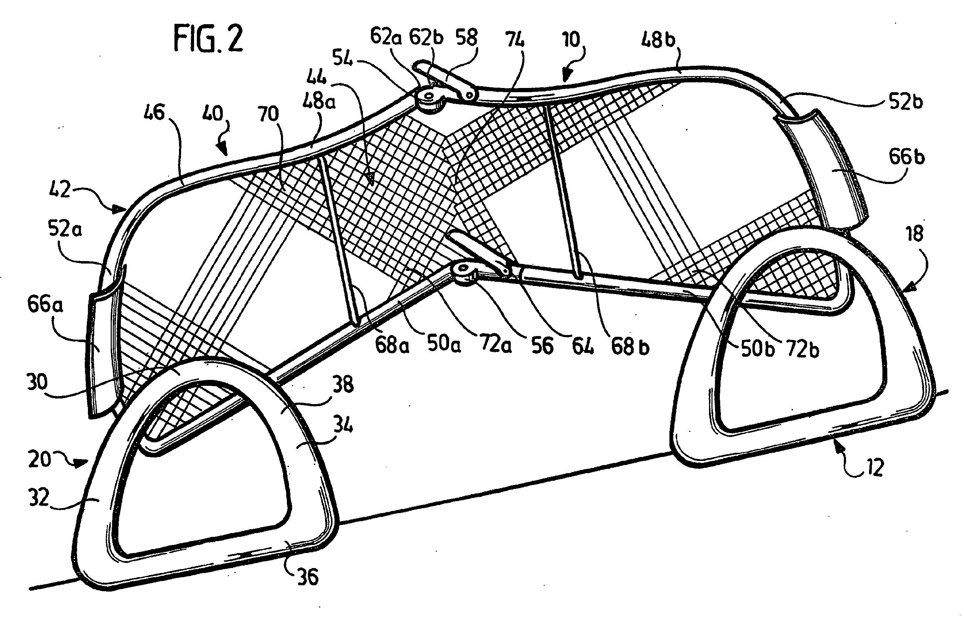

Ein Ausführungsbeispiel eines erfindungsgemäßen Windschotts, welches in Figur 2 dargestellt und dort als Ganzes mit 10 bezeichnet ist, ist an einem in den Figuren 1 und 2 als Ganzes mit 12 bezeichneten Überrollbügel einer Kraftfahrzeugkarosserie 14 eines Personenkraftfahrzeugs festlegbar. Bei dem Personenkraftfahrzeug handelt es sich vorzugsweise um ein Cabriofahrzeug.

Der Überrollbügel 12 steht dabei über eine Gürtellinie oder Brüstungslinie 16 der Kraftfahrzeugkarosserie 14 nach oben und umfaßt zwei in einem Abstand zueinander angeordnete Bogenelemente 18 und 20. Diese sind nebeneinander jeweils hinter Rückenlehnen 22 und 24 von in einem Fahrgastraum 26 angeordneten Sitzen des Cabriofahrzeuges angeordnet.

Die Bogenelemente 18 und 20 sind bei einer Variante einer Ausführungsform grundsätzlich gleich ausgebildet beispielsweise in der Form eines U-Bogens, dessen Schenkelöffnung nach unten zum Cabriofahrzeug hin weist. Sie erstrecken sich in einer Ebene quer zu einer Längsrichtung 28 der Kraftfahrzeugkarosserie 14. Ein Bogenelement 18, 20 umfaßt dabei einen ersten Bogenabschnitt 30 in der Form eines Mittelschenkels, an den sich links und rechts jeweils ein zweiter Bogenabschnitt 32 und ein dritter Bogenabschnitt 34 in der Form von Seitenschenkeln anschließt. Die Seitenschenkel 32 und 34 wiederum sind mit einem Grundträger 36 des Überrollbügels 12 verbunden. Der Grundträger 36 verläuft dabei zwischen den Bogenelementen 18 und 20 (dies ist in Figur 2 nicht gezeigt). Bei der in den Figuren 1 und 2 gezeigten Variante verläuft der Grundträger 36 auch noch zwischen den Seitenschenkeln 32 und 34, das heißt die U-förmigen Bogenelemente 18, 20 sind bei der gezeigten Variante unter Berücksichtigung des Grundträgers D-förmig.

Die Bogenelemente 18, 20 sind mit einer Verkleidung 38 versehen.

Ein erstes Ausführungsbeispiels eines Windschotts 10, welches in Figur 2 als ganzes mit 40 bezeichnet ist, umfaßt eine Trägervorrichtung 42, welche an dem Überrollbügel 12 festlegbar ist, und welche Windschott-Flächenelemente 44 hält. Die Trägervorrichtung 42 umfaßt eine Rahmenstruktur 46 mit oberen Rahmenteilen 48a, 48b und unteren Rahmenteilen 50a, 50b. Bei an dem Überrollbügel 12 montierter Trägervorrichtung 42 sind die unteren Rahmenteile 50a, 50b dem Grundträger 36 des Überrollbügels 12 zugewandt. Zwischen dem zugeordneten oberen Rahmenteil 48a und unteren Rahmenteil 50a beziehungsweise 48b, 50b ist jeweils ein Seitenbügel 52a, 52b angeordnet.

Die oberen Rahmenteile 48a und 48b sind über ein Schwenkgelenk 54 mit einer Schwenkachse quer zu den oberen Rahmenteilen 48a, 48b relativ zueinander schwenkbar. Das Schwenkgelenk 54 ist dabei bevorzugterweise im wesentlichen mittig an der Rahmenstruktur 46 angeordnet. Ebenso ist ein Schwenkgelenk 56 vorgesehen, mittels dem die unteren Rahmenteile 50a und 50b relativ zueinander schwenkbar sind, wobei die Schwenkgelenke 54 und 56 so bezüglich aneinander angeordnet und ausgerichtet sind, daß sie eine gemeinsame Schwenkachse aufweisen.

Mittels der Schwenkgelenke 54, 56 läßt sich eine Länge der Trägervorrichtung 42 bezogen auf die Ebene, in welcher die Bogenelemente 18, 20 des Überrollbügels 12 liegen, verändern. Diese Längenänderung geht einher mit einer Änderung der Tiefenausdehnung der Trägervorrichtung 42 quer zu der genannten Ebene: Ist die Tiefenausdehnung minimal, dann ist die Länge der Trägervorrichtung 42 in der genannten Ebene maximal und umgekehrt.

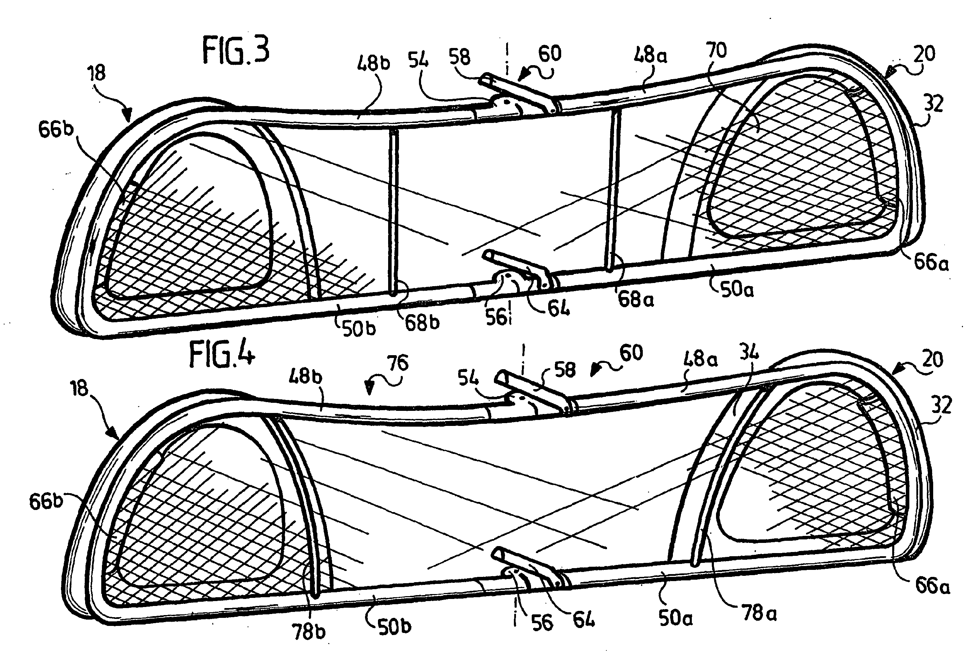

Zur Sperrung der Schwenkbarkeit der oberen Rahmenteile 48a, 48b gegeneinander ist ein Rastelement 58 vorgesehen. Bei dem in Figur 2 gezeigten Ausführungsbeispiel ist das Rastelement 58 als Schwenkklappe ausgebildet, welche an dem oberen Rahmenteil 48b angeordnet ist und schwenkbar mit einer Schwenkachse quer zum oberen Rahmenteil 48b und quer zur Schwenkachse des Schwenkgelenks 54 gelagert ist. Die Klappe ist rinnenförmig ausgebildet mit der Rinnenöffnung nach unten und diese ist angepaßt an eine Außenfläche des oberen Rahmenteils 48a im Bereich des Schwenkgelenks 54. In einer Parallelstellung relativ zum oberen Rahmenteil 48b ragt die Klappe 58 über das obere Rahmenteil 48b hinaus und kann, wenn die oberen Rahmenteile 48a und 48b mindestens im Bereich des Schwenkgelenkes 54 fluchtend ausgerichtet sind, an der Oberfläche des oberen Rahmenteils 48a anliegen. Dadurch ist die Rückschwenkbarkeit der oberen Rahmenteile 48a, 48b relativ zueinander gesperrt und durch das Rastelement 58 ist damit eine Festlegungsstellung 60 (Figur 3) der Trägervorrichtung 42 verriegelbar.

Diese Festlegungsstellung 60 entspricht im wesentlichen einer Stellung, in welcher die Trägervorrichtung 42 eine maximale Länge bezüglich der Ebene, in welcher die Bogenelemente 18 und 20 liegen, aufweist. Bei einer Variante einer Ausführungsform, welche in den Figuren 2 und 3 gezeigt ist, ist die Festlegungsstellung 60 definiert durch einen Totpunkt der Schwenkbarkeit der oberen Rahmenteile 48a und 48b relativ zueinander, bei welchem eine Stirnfläche 62a des oberen Rahmenteils 48a an eine Stirnfläche 62b des oberen Rahmenteils 48b stößt und somit eine weitere Schwenkbarkeit der oberen Rahmenteile 48a und 48b relativ zueinander gesperrt ist.

Der untere Rahmenteil 50b ist ebenfalls mit einem Rastelement 64 versehen, welches grundsätzlich gleich ausgebildet und angeordnet ist wie eben anhand der oberen Rahmenteile 48a und 48b für das Rastelement 58 beschrieben.

Alternativ kann es vorgesehen sein, daß das Rastelement 64 an dem unteren Rahmenteil 50a angeordnet ist.

An den Seitenbügeln 52a und 52b der Trägervorrichtung 42 ist jeweils eine Haltelasche 66a, 66b angeordnet, welche jeweils rinnenförmig ausgebildet sind mit einer Rinnenöffnung, welche nach außen weist. Die Haltelaschen 66a, 66b sind jeweils an die zweiten Bogenabschnitte 32 der Bogenelemente 18 und 20 in ihrer Form angepaßt, so daß eine Haltelasche 66a beziehungsweise 66b auf einer Innenseite des zweiten Bogenabschnitts 32 des zugeordneten Bogenelementes 18 beziehungsweise 20 anlegbar ist und teilweise das zugeordnete Bogenelement 18, 20 an dem zweiten Bogenabschnitt 32 umgreifen kann. Bevorzugterweise sind die Haltelaschen 66a, 66b aus einem elastischen Material hergestellt, so daß diese insbesondere eine Federwirkung haben, durch welche die Trägervorrichtung 42 über die Haltelaschen 66a, 66b an dem Überrollbügel 12 einspannbar ist.

Bei dem in Figur 2 gezeigten Ausführungsbeispiel ist jeweils links und rechts von dem Schwenkgelenk 54 in einem Abstand zu diesem und bevorzugterweise symmetrisch zu der Schwenkachse zwischen dem oberen Rahmenteil 48a und dem unteren Rahmenteil 50a eine Stützstrebe 68a und zwischen dem oberen Rahmenteil 48b und dem unteren Rahmenteil 50b eine Stützstrebe 68b angeordnet. Die Stützstreben 68a und 68b verbinden die oberen Rahmenteile 48a, 48b mit den unteren Rahmenteilen 50a, 50b und erhöhen dadurch die Querstabilität der Trägervorrichtung.

Die Windschott-Flächenelemente 44 sind insbesondere durch eine Windabweiserbahn 70 gebildet, welche vorzugsweise aus einer biegeschlaffen Materialbahn hergestellt ist, welche wiederum aus einem luftdurchlässigen, jedoch für Wind undurchlässigem Netz oder Gewebe gebildet ist. Diese Windabweiserbahn 70 ist dabei so an der Trägervorrichtung 42 angeordnet und ausgebildet, daß sie die Schwenkbarkeit der Rahmenteile 48a, 48b und 50a, 50b relativ zueinander nicht behindert und zum anderen bei der montierten Trägervorrichtung 42 in der Festlegungsstellung 60 im wesentlichen gespannt ist.

Dies läßt sich beispielsweise dadurch erreichen, daß zwischen dem oberen Rahmenteil 48a und dem unteren Rahmenteil 50a eine erste Windabweiserbahn 72a gespannt ist und zwischen dem oberen Rahmenteil 48b und dem unteren Rahmenteil 50b eine zweite Windabweiserbahn 72b gespannt ist, wobei die beiden Windabweiserbahnen 72a und 72b Maschenrichtungen aufweisen, welche im Bereich der Schwenkachse der Schwenkgelenke 54, 56 in einem Winkel aufeinander treffen. Die Windabweiserbahnen 72a und 72b sind in dem Bereich 74, in welchem sie aufeinander treffen, miteinander verwoben. Insbesondere ist dabei das Material der Windabweiserbahn 72a und 72b elastisch, um die relative Schwenkbarkeit der Rahmenstruktur 46 nicht zu behindern.

Eine alternative Möglichkeit wäre es, dafür zu sorgen, daß in dem Bereich 74 die Windabweiserbahn 72 eine Tasche ausbildet, welche die Schwenkbarkeit der Rahmenstruktur 46 ermöglicht und insbesondere ein Zusammenklappen der Rahmenstruktur 46 ermöglicht, und andererseits ein Spannen der Windabweiserbahn 70 in der Festlegungsstellung 60 erlaubt.

Das erfindungsgemäße Windschott funktioniert wie folgt:

Das Windschott 40 läßt sich platzsparend aufbewahren, in dem die Rahmenstruktur 46 so verschwenkt wird, daß die oberen Rahmenteile 48a und 48b einander zugewandt sind und im wesentlichen parallel zueinander ausgerichtet sind. Die Länge der Trägervorrichtung 42 ist dann auf im wesentlichen die Hälfte ihrer maximalen Länge reduziert und die Tiefe der Trägervorrichtung 42 auf das im wesentlichen Doppelte ihrer minimalen Tiefe.

Zum Festlegen der Trägervorrichtung 42 an dem Überrollbügel 12 wird die Rahmenstruktur 46 ausgeklappt und insbesondere soweit ausgeklappt, daß die Haltelaschen 66a und 66b sich an Innenseiten der zweiten Bogenabschnitte 32 der jeweiligen Bogenelemente 18 und 20 anlegen lassen. Die Rahmenteile 48a, 48b und 50a, 50b werden dann unter Kraftaufwand weiter relativ zueinander verschwenkt, bis die Festlegungsstellung 60 erreicht ist. Da die Haltelaschen 66a und 66b aus einem elastischen Material ausgebildet sind, üben diese in der Festlegungsstellung 60 eine Kraft auf die zugeordneten zweiten Bogenabschnitte 32 der jeweiligen Bogenelemente 18 und 20 auf, wobei diese Kraft nach außen gerichtet ist. Die Trägervorrichtung 42 und damit das Windschott 40 ist dadurch, wie in Figur 3 zeigt, klemmend an dem Überrollbügel 12 gehalten.

Durch Verriegelung der Rastelemente 58 und 60 wird die Festlegungsstellung 60 verriegelt und damit die Haltestellung der Trägervorrichtung 42 an dem Überrollbügel 12 verriegelt.

Durch die Klemmfestlegung des Windschotts 40 an dem Überrollbügel 12 muß letzterer zur Halterung eines Windschottes nicht vorgerüstet sein oder werden. Auch läßt sich das Windschott 40 auf einfache Weise an dem Überrollbügel 12 montieren und sich auch auf einfache Weise wieder entfernen, in dem die oben genannten Schritte in umgekehrter Richtung durchgeführt werden. Auch läßt sich das Windschott 40 platzsparend lagern.

Bei dem gezeigten Ausführungsbeispiel ist das Windschott 40 am Überrollbügel 12 an dessen dem Fahrgastraum 26 abgewandten Seite festgelegt. Dadurch liegt das Windschott 40 nicht im Fahrgastraum 26, wodurch die Verletzungsgefahr bei Unfällen verringert ist.

Grundsätzlich läßt sich das erfindungsgemäße Windschott aber auf jeder Seite des Überrollbügels 12 montieren.

Eine Variante des Windschottes 40 gemäß Figur 2 und Figur 3 ist in Figur 4 als ganzes mit 76 bezeichnet. Dieses Windschott 76 ist grundsätzlich gleich ausgebildet, wie das Windschott 40 und funktioniert gleich wie dieses. Gleiche Elemente werden deshalb mit gleichem Bezugszeichen bezeichnet.

Das Windschott 76 unterscheidet sich von dem Windschott 44 dadurch, daß eine Stützstrebe 78a, welche zwischen dem oberen Rahmenteil 48a und dem unteren Rahmenteil 50a angeordnet ist, bogenförmig ausgebildet ist und in seiner Form angepaßt ist an den dritten Bogenabschnitt 34 des Bogenelementes 20. Weiterhin ist die Stützstrebe 78a so angeordnet, daß sie bei montierter Trägervorrichtung 42 im Bereich des Bogenelementes 20 liegt. Das Bogenelement 20 verdeckt dann die Stützstrebe 78a. Ähnlich ist die Stützstrebe 78b zwischen dem oberen Rahmenteil 48b und dem unteren Rahmenteil 50b angeordnet und ausgebildet.

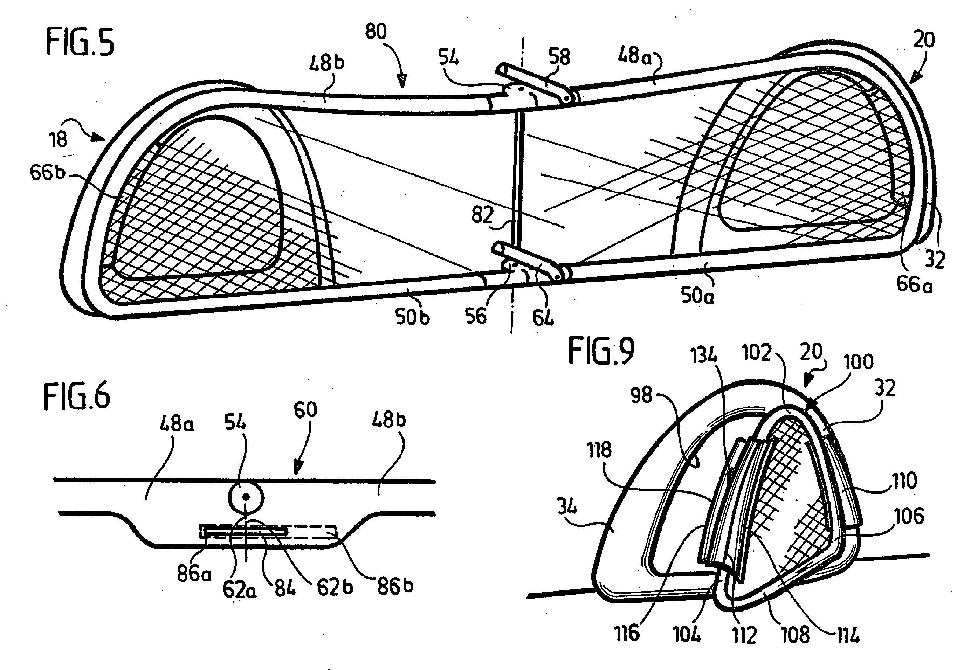

Bei einer weiteren Variante 80 eines Windschottes, welche in Figur 5 gezeigt ist, ist eine Stützstrebe 82 durch eine Schwenkwelle zwischen dem Schwenkgelenk 54 und dem Schwenkgelenk 56 gebildet, das heißt das Schwenkgelenk 54 an den oberen Rahmenteilen 48a, 48b und das Schwenkgelenk 56 an den unteren Rahmenteilen 50a und 50b stützen sich aufeinander ab. Ansonsten funktioniert das Windschott 80 wie oben beschrieben.

Alternativ zu einer Klappe als Rastelement 58 beziehungsweise 64 kann, wie in Figur 6 schematisch gezeigt, auch ein Schieber 84 vorgesehen sein, welcher in einer Nut 86a des oberen Rahmenteils 48a und in einer Nut 86b des oberen Rahmenteils 48b geführt ist. Solch ein Schieber 84 ist insbesondere in die Rahmenstruktur 46 derart integrierbar, daß er nicht auffällt und so der ästhetische Gesamteindruck durch Rastelemente nicht gestört wird. Die Nuten 86a und 86b sind dabei so angeordnet, daß sie in der Festlegungsstellung 60 fluchtend zueinander ausgerichtet sind, so daß der Schieber von einem oberen Rahmenteil, beispielsweise dem oberen Rahmenteil 48b, in das andere Rahmenteil, beispielsweise aus dem oberen Rahmenteil 48a verschoben werden kann, wobei der Schieber dann teilweise in der Nut 86a liegt und teilweise in der Nut 86b und somit eine weitere Verschwenkung der oberen Rahmenteile 48a und 48b gesperrt ist, das heißt die Festlegungsstellung 60 verriegelt ist.

Der Schieber 84 ist dabei insbesondere verliersicher in der Nut 86b geführt und derart, daß er vollständig in diese eintauchen kann, um die Schwenkbewegungen vor Erreichen der Festlegungsstellung 60 nicht zu behindern.

Auf die gleiche Weise lassen sich auch die unteren Rahmenteile 50a und 50b miteinander verriegeln.

Bei einer alternativen Ausführungsform kann es vorgesehen sein, daß die Festlegungsstellung jenseits eines Totpunktes der Schwenkbewegung der Rahmenstruktur 46 liegt.

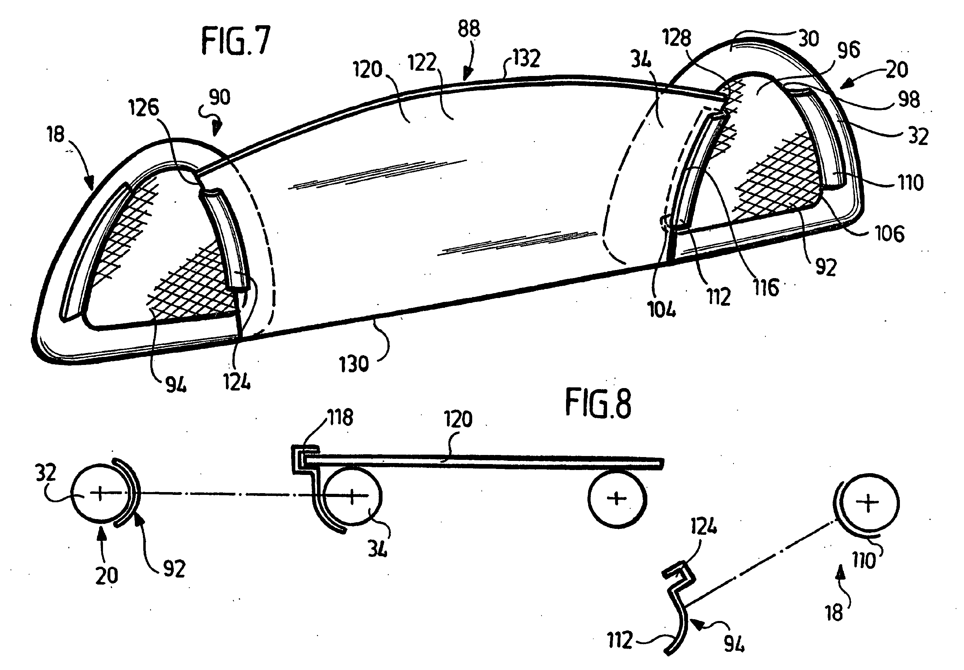

Bei einem zweiten Ausführungsbeispiel eines erfindungsgemäßen Windschottes, welches in Figur 7 als ganzes mit 88 bezeichnet ist, umfaßt eine als Ganzes mit 90 bezeichnete Trägervorrichtung eine erste Trägerstruktur 92, welche an dem Bogenelement 20 festlegbar ist, und eine zweite Trägerstruktur 94, welche an dem Bogenelement 18 festlegbar ist. Die erste Trägerstruktur 92 und die zweite Trägerstruktur 94 sind grundsätzlich gleich, jedoch spiegelsymmetrisch zueinander ausgebildet. Im folgenden wird daher nur die erste Trägerstruktur 92 näher beschrieben.

Diese hält eine Windabweiserbahn 96, welche eine Öffnung 98 des Bogenelementes 20 abdecken soll. Entsprechend ist die erste Trägerstruktur 92 an die Bogenabschnitte 30, 32 und 34 des Bogenelementes 20 angepaßt, und zwar an deren Innenseiten (Figur 9). Die erste Trägerstruktur 92 weist dazu einen Rahmen 100 mit einem Mittelschenkel 102, Seitenschenkeln 104 und 106 und einen Verbindungsschenkel 108 zwischen den Seitenschenkeln 104 und 106 auf. An diesen Schenkeln 102, 104, 106 und 108 ist die Windabweiserbahn 96 gehalten. Die erste Trägerstruktur 92 mit ihren Schenkeln ist dabei so ausgebildet, daß die Öffnung 98 im wesentlichen vollständig abdeckbar ist.

An dem Seitenschenkel 106 ist eine Haltelasche 110 angeordnet, welche grundsätzlich gleich ausgebildet ist wie die oben im Zusammenhang mit dem ersten Ausführungsbeispiel beschriebene Haltelasche 66a. Die Haltelasche 110 dient zum Anlegen der ersten Trägerstruktur 92 an einer Innenseite des zweiten Bogenabschnitts 32, wobei dieser Bogenabschnitt 32 einer Außenseite des Cabriofahrzeuges zugewandt ist.

An dem Seitenschenkel 104 der ersten Trägerstruktur 92 ist eine Haltelasche 112 angeordnet, welche ein rinnenförmiges Element 114 aufweist, welches zur Anlage an einer Innenseite des dritten Bogenabschnittes 34 dient, wobei dieser dritte Bogenabschnitt 34 dem Inneren des Cabriofahrzeuges zugewandt ist. Die Haltelasche 112 ist insbesondere mindestens im Bereich des rinnenförmigen Elements 114 aus einem elastischen Material gefertigt, so daß die erste Trägerstruktur mittels der Haltelasche 110 an das Bogenelement 20 ansetzbar ist und zum Anlegen der Haltelasche 112 das rinnenförmige Element 114 derart elastisch verformt werden kann, daß die Sperrung durch den dritten Bogenabschnitt 34 überwunden werden kann und danach die erste Trägerstruktur 92 klemmend an dem Bogenelement 20 gehalten ist. Insbesondere läßt sich auch ein Toleranzausgleich beispielsweise gegenüber Fertigungtoleranzen erzielen.

Weiterhin weist die Haltelasche 112 ein insbesondere einstückig mit ihm verbundenes Nutelement 116 auf, welches bei eingesetzter erster Trägerstruktur 92 dem anderen Bogenelement 18 zugewandt angeordnet ist und dabei versetzt zur Ebene der Bogenelemente 18, 20 liegt. Eine Nut 118 des Nutelements 116 verläuft dabei quer zu einer Abstandsrichtung zwischen den Bogenelementen 18 und 20. In diese Nut 118 läßt sich ein Träger 120 einsetzen, welcher Windschott-Flächenelemente 122 trägt oder selber ein Windschott-Flächenelement darstellt.

Eine entsprechende Nut 124 der zweiten Trägerstruktur 94 ist dabei, wenn diese zweite Trägerstruktur 94 in das Bogenelement 18 eingesetzt ist, der Nut 118 zugewandt. Der Träger 120 läßt sich dann in den Zwischenraum zwischen den Bogenelementen 18 und 20 in die Nuten 118 und 124 einsetzen.

Insbesondere ist die Struktur 120 und sind die Nuten 118 und 124 dabei so ausgebildet, daß eine Verschiebung des Trägers 120 nach unten begrenzt ist; der Träger 120 ist in seiner Beweglichkeit nach unten, dem Grundträger 36 des Überrollbügels 12 zu, fixierbar, und zwar insbesondere durch einen Anschlag, welcher durch die Zusammenwirkung zwischen dem Träger 120, wenn er in die Nuten 118 und 124 eingesetzt ist, mit diesen Nuten gebildet ist.

Beispielsweise sind dazu die Nuten 118 und 124 bogenförmig ausgebildet und bezogen auf die erste Trägerstruktur 92 und die zweite Trägerstruktur 94 spiegelsymmetrisch zueinander angeordnet. Der Träger 120 ist an seinen endseitigen Stirnflächen 126, 128 ebenfalls bogenförmig ausgebildet und zwar derart, daß eine untere Stirnfläche 130 kürzer ist als eine obere Stirnfläche 132. Dadurch läßt sich der Träger 120 in die an den Bogenelementen 18 beziehungsweise 20 fixierten Nuten 124 beziehungsweise 118 einsetzen und nach unten verschieben, jedoch ist ab einer bestimmten Stellung die Verschieblichkeit begrenzt.

Zur Verriegelung der Verschiebung des Trägers 120 nach oben ist eine Verriegelungsvorrichtung vorgesehen. Beispielsweise sind dazu die Nuten 118, 124 mit Ausnehmungen 134 versehen (Figur 9), in die Rastnasen, des Trägers 120 einrasten können. Es können auch andere Verriegelungsmittel vorgesehen sein wie beispielsweise Formschlußmittel zur Fixierung des Trägers 120 an den Trägerstrukturen 92, 94.

Der Träger 120 kann dabei insbesondere durch eine Scheibe wie beispielsweise einer Plexiglasscheibe gebildet sein. Es kann aber auch eine Rahmenstruktur mit daran fixierter Windabweiserbahn vorgesehen sein.

In dem Ausführungsbeispiel gemäß Figur 8 sind die an den Trägerstrukturen 92, 94 gehaltenen Windschott-Flächenelemente 96 versetzt zu den Windschott-Flächenelementen angeordnet, welche am Träger 120 gehalten oder durch diesen gebildet sind. Es kann aber auch vorgesehen sein, daß alle diese Windschott-Flächenelemente flächenbündig zueinander liegen (in der Zeichnung nicht gezeigt). Dadurch kann ein schöner ästhetischer Gesamteffekt erzielt werden und beispielsweise kann das Windschott an Karosserieformen angepaßt sein.

Eine Trägerstruktur 92, 94 kann insbesondere als einteiliges Kunststoff-Spritzgußteil ausgebildet sein, wobei das zugehörige Windschott-Flächenelement einteilig an diesem Spritzgußteil gebildet ist (es ist dann kein Netz oder Gewebe als Windschott-Flächenelement vorgesehen).

Bei dem in Figur 7 gezeigten Ausführungsbeispiel ist somit das Windschott 88 dreiteilig: Es ist die erste Trägerstruktur 92 für das Bogenelement 20 vorgesehen, die zweite Trägerstruktur 94 für das Bogenelement 18 und der Träger 120, welche durch die beiden Trägerstrukturen 92 und 94 gehalten ist, für den Zwischenraum zwischen den Bogenelementen 18 und 20.

Es kann auch vorgesehen sein, daß zur Fixierung einer Trägervorrichtung diese mit Laschen versehen ist, welche die Bogenelemente 18, 20 an ihren jeweils gegenüberliegenden Außenseiten mindestens teilweise umgreifen. Die Trägerstruktur für ein Windschott-Flächenelement zwischen den Bogenelementen 18 und 20 ist dann getrennt von den Trägerstrukturen für die jeweiligen Windschott-Flächenelemente für die Bogenelemente 18, 20.

Das erfindungsgemäße Windschott 88 läßt sich wie folgt an dem Überrollbügel 12 festlegen:

Die Haltelasche einer Trägerstruktur, beispielsweise die Haltelasche 110 der zweiten Trägerstruktur 94, wird an der Innenseite des zweiten Bogenabschnitts 32 des Bogenelementes 18 angelegt und die zweite Trägerstruktur 94 wird dann zu dem dritten Bogenabschnitt 34 hingedreht (Figur 8). Wie oben beschrieben wurde, kann dann die Haltelasche an dem dritten Bogenabschnitt 34 fixiert werden, in dem diese elastisch verformt wird und dann, nach Überwindung der Sperrung, die elastische Verformung aufgehoben wird und danach die zweite Trägerstruktur 94 klemmend an dem Bogenelement 18 gehalten ist.

Es kann auch, wie in Figur 8 gezeigt, vorgesehen sein, daß eine Trägerstruktur an einem Bogenelement nicht klemmend gehalten ist, sondern nur anliegt und die endgültige Fixierung erst über die Struktur 120 zustande kommt.

Wie eben beschrieben für die zweite Trägerstruktur 94 wird mit der ersten Trägerstruktur 92 vorgegangen. Danach sind die Nuten 118 der ersten Trägerstruktur 92 und 124 der zweiten Trägerstruktur 94 fluchtend zueinander ausgerichtet und zwar in einer Ebene parallel zu der Ebenen der Bogenelemente 18 und 20. Es kann dann der Träger 120 für die Windschott-Flächenelemente eingesetzt werden.

Bei dem in Figur 8 gezeigten Ausführungsbeispiel verhindert der Träger 120 ein Rückdrehen der Trägerstrukturen 92 und 94 weg von der Trägerstruktur 120, so daß diese nach Einsetzen in Nuten 118 und 124 die endgültige Fixierung der Trägervorrichtung 90 an dem Überrollbügel 12 bewirkt.

## Patentansprüche

1. Windschott für ein Personenkraftfahrzeug mit Überrollbügel (12), umfassend Windschott-Flächenelemente (70; 122) und eine Trägervorrichtung (42; 90) für die Windschott-Flächenelemente (70; 120), welche mindestens zwei in einem Abstand angeordnete Haltelaschen (66a, 66b; 110, 112) aufweist die so angeordnet und ausgebildet sind, dass sie an jeweiligen Bügelabschnitten (32; 34) des Überrollbügels (12) zur Festlegung der Trägervorrichtung (42; 90) festlegbar sind,
**dadurch gekennzeichnet, dass** die Haltelaschen (66a, 66b, 110, 112) an den Überrollbügel (12) anlegbar sind und dass eine Haltelasche (66a, 66b; 110, 112) so ausgebildet ist, dass ein korrespondierender Bügelabschnitt (32; 34) durch sie mindestens teilweise umgreifbar ist.

2. Windschott nach Anspruch 1, **dadurch gekennzeichnet, dass** eine Haltelasche (66a, 66b; 110, 112) an die Abmessungen des Bügelabschnittes (32; 34), an welchen sie angelegt werden soll, in ihrer Form angepasst ist.

3. Windschott nach einem der vorangehenden Ansprüche, **dadurch gekennzeichnet, dass** eine Haltelasche (66a, 66b; 110, 112) rinnenförmig ausgebildet ist.

4. Windschott nach einem der vorangehenden Ansprüche, **dadurch gekennzeichnet, dass** eine Haltelasche (66a, 66b; 110, 112) elastisch ausgebildet ist.

5. Windschott nach einem der vorangehenden Ansprüche, **dadurch gekennzeichnet, dass** eine Haltelasche (66a, 66b; 110, 112) über eine Windschott-Flächenelement-Ebene der Trägervorrichtung (42; 90) hinausragt.

6. Windschott nach einem der vorangehenden Ansprüche, **dadurch gekennzeichnet, dass** die mindestens zwei Haltelaschen (66a, 66b; 110, 112) an oder in der Nähe gegenüberliegender seitlicher Enden der Trägervorrichtung (42; 90) angeordnet sind.

7. Windschott nach einem der vorangehenden Ansprüche, **dadurch gekennzeichnet, dass** der Überrollbügel ein oder mehrere Bogenelemente (18, 20) aufweist und dass eine Haltelasche (66a, 66b; 110, 112) so angeordnet und ausgebildet ist, dass sie an einer Innenbogenseite eines jeweiligen Bügelabschnittes (32; 34) des Bogenelementes (18, 20) anlegbar ist.

8. Windschott nach Anspruch 7, **dadurch gekennzeichnet, dass** die mindestens zwei Haltelaschen (66a, 66b; 110, 112) so an der Trägervorrichtung (42; 90) in einem Abstand angeordnet sind, dass sie in ihrer Flächennormalen-Richtung bezüglich einer Anlagefläche an dem Überrollbügel (12) jeweils entgegengerichtet nach außen weisen.

9. Windschott nach einem der vorangehenden Ansprüche, **dadurch gekennzeichnet, dass** die Trägervorrichtung (42) einteilig ausgebildet ist.

10. Windschott nach Anspruch 9, **dadurch gekennzeichnet, dass** die Trägervorrichtung (42) eine Rahmenstruktur (46) aufweist.

11. Windschott nach Anspruch 9 oder 10, **dadurch gekennzeichnet, dass** die Trägervorrichtung (42) so ausgebildet ist, dass ihre Länge parallel zum Überrollbügel (12) veränderbar ist.

12. Windschott nach Anspruch 11, **dadurch gekennzeichnet, dass** die Trägervorrichtung (42) zur Längenänderung ein oder mehrere Schwenkgelenke (54, 56) aufweist.

13. Windschott nach Anspruch 12, **dadurch gekennzeichnet, dass** ein Schwenkgelenk (54; 56) zumindest näherungsweise mittig an einer Rahmenstruktur (46) der Trägervorrichtung (42) angeordnet ist.

14. Windschott nach einem der Ansprüche 9 bis 13, **dadurch gekennzeichnet, dass** in einer Festlegungsstellung (60) der Trägervorrichtung (42) diese mittels der mindestens zwei Haltelaschen (66a, 66b) an dem Überrollbügel (12) klemmend festlegbar ist.

15. Windschott nach Anspruch 14, **dadurch gekennzeichnet, dass** die Festlegungsstellung (60) jenseits eines Totpunktes bezüglich Schwenkpositionen relativ zueinander schwenkbarer Rahmenteile (48a, 48b; 50a, 50b) der Trägervorrichtung (42) liegt.

16. Windschott nach Anspruch 14 oder 15, **dadurch gekennzeichnet, dass** die Festlegungsstellung verriegelbar ist.

17. Windschott nach Anspruch 16, **dadurch gekennzeichnet, dass** zur Verriegelung der Festlegungsposition (60) mindestens ein Rastelement (58; 64) vorgesehen ist, durch welches relativ zueinander bewegliche Teile (48a, 48b; 50a, 50b) einer Rahmenstruktur (46) der Trägervorrichtung (42) miteinander im Wesentlichen unbeweglich koppelbar sind.

18. Windschott nach Anspruch 17, **dadurch gekennzeichnet, dass** das Rastelement als Schwenkklappe (58) ausgebildet ist.

19. Windschott nach Anspruch 17, **dadurch gekennzeichnet, dass** das Rastelement als Rastschieber (84) ausgebildet ist.

20. Windschott nach einem der Ansprüche 10 bis 17, **dadurch gekennzeichnet, dass** eine oder mehrere Streben (68a, 68b; 78a, 78b; 82) zwischen einem oberen Rahmenteil (48a; 48b) und einem unteren Rahmenteil (50a; 50b) der Rahmenstruktur (46) angeordnet sind.

21. Windschott nach Anspruch 20, **dadurch gekennzeichnet, dass** eine Stützstrebe (82) als Schwenkwelle eines Schwenkgelenks (54; 56) zur Längenänderung der Trägervorrichtung (42) ausgebildet ist.

22. Windschott nach Anspruch 20 oder 21, **dadurch gekennzeichnet, dass** Stützstreben (78a, 78b) so angeordnet und ausgebildet sind, dass sie bei montiertem Windschott (10) im Bereich von Bogenabschnitten (34) des Windschottes (10) liegen.

23. Windschott nach einem der Ansprüche 1 bis 8, **dadurch gekennzeichnet, dass** der Überrollbügel (12) mindestens eine erstes und ein zweites beabstandetes Bogenelement (18, 20) umfasst und dass die Trägervorrichtung (90) eine erste Trägerstruktur (92), welche an dem ersten Bogenelement (20) festlegbar ist, und eine zweite Trägerstruktur (94), welche an dem zweiten Bogenelement (18) festlegbar ist, umfasst.

24. Windschott nach Anspruch 23, **dadurch gekennzeichnet, dass** durch eine Trägerstruktur (92; 94) ein Windschott-Flächenelement (96) für das zugeordnete Bogenelement (20; 18) gehalten ist.

25. Windschott nach Anspruch 23 oder 24, **dadurch gekennzeichnet, dass** zwischen der ersten Trägerstruktur (92) und der zweiten Trägerstruktur (94) ein Träger (120) für Windschott-Flächenelemente (122) für den Zwischenraum zwischen den Bogenelementen (18, 20) festlegbar sind.

26. Windschott nach Anspruch 25, **dadurch gekennzeichnet, dass** das Windschott-Flächenelement (122) für den Zwischenraum zwischen den Bogenelementen (18, 20) scheibenförmig ausgebildet ist.

27. Windschott nach einem der Ansprüche 23 bis 26, **dadurch gekennzeichnet, dass** eine Trägerstruktur (92; 94) gegenüberliegende Haltelaschen (110, 112) zu deren Festlegung an dem zugeordneten Bogenelement (20; 18) aufweist.

28. Windschott nach Anspruch 27, **dadurch gekennzeichnet, dass** eine Haltelasche (112) mit einer Nut (118) versehen ist, welches so angeordnet und ausgebildet ist, dass ein Träger (120) für Windschott-Flächenelemente (122) einschiebbar ist.

29. Windschott nach Anspruch 28, **dadurch gekennzeichnet, dass** die Nut (118) und der zugeordnete Träger (120) so ausgebildet sind, dass bei an dem Überrollbügel (12) montierter Trägervorrichtung die Verschieblichkeit des Trägers (120) nach unten begrenzt ist.

30. Windschott nach einem der Ansprüche 25 bis 29, **dadurch gekennzeichnet, dass** eine Verriegelungsvorrichtung vorgesehen ist, durch welche eine Verschiebung eines montierten Trägers (120) nach oben begrenzbar ist.

31. Windschott nach einem der Ansprüche 25 bis 30, **dadurch gekennzeichnet, dass** die Trägerstrukturen (92, 94) und der Träger (120) so ausgebildet sind und so an dem Überrollbügel (12) montierbar sind, dass die zugeordneten Windschott-Flächenelemente (96, 122) bündig in einer Fläche liegen.

## Claims

1. Wind stop device for a passenger vehicle with a roll bar (12), comprising surface elements (70; 122) of the wind stop device and a supporting device (42; 90) for the surface elements (70; 122) of the wind stop device, said supporting device having at least two holding brackets (66a, 66b; 110, 112) arranged in spaced relationship, said holding brackets being arranged and designed such that they are adapted to be secured on respective bar sections (32; 34) of the roll bar (12) for securing the supporting device (42; 90), **characterized in that** the holding brackets (66a, 66b; 110, 112) are adapted to abut on the roll bar (12) and that a holding bracket (66a, 66b; 110, 112) is designed such that it is adapted to engage around a corresponding bar section (32; 34) at least partially.

2. Wind stop device as defined in claim 1, **characterized in that** a holding bracket (66a, 66b; 110, 112) is adapted in its shape to the dimensions of the bar section (32; 34), on which it is intended to abut.

3. Wind stop device as defined in either one of the preceding claims, **characterized in that** a holding bracket (66a, 66b; 110, 112) is of a channel-like design.

4. Wind stop device as defined in any one of the preceding claims, **characterized in that** a holding bracket (66a, 66b; 110, 112) is of an elastic design.

5. Wind stop device as defined in any one of the preceding claims, **characterized in that** a holding bracket (66a, 66b; 110, 112) projects beyond a wind stop device surface element plane of the supporting device (42; 90).

6. Wind stop device as defined in any one of the preceding claims, **characterized in that** the at least two holding brackets (66a, 66b; 110, 112) are arranged at or in the vicinity of oppositely located lateral ends of the supporting device (42; 90).

7. Wind stop device as defined in any one of the preceding claims, **characterized in that** the roll bar has one or more curved elements (18, 20) and that a holding bracket (66a, 66b; 110, 112) is arranged and designed such that it is adapted to abut on an inner curved side of a respective bar section (32; 34) of the curved element (18, 20).

8. Wind stop device as defined in claim 7, **characterized in that** the at least two holding brackets (66a, 66b; 110, 112) are arranged in spaced relationship on the supporting device (42; 90) such that they point outwards in respectively opposite directions in their surface normal direction with respect to a contact surface on the roll bar (12).

9. Wind stop device as defined in any one of the preceding claims, **characterized in that** the supporting device (42) is designed in one piece.

10. Wind stop device as defined in claim 9, **characterized in that** the supporting device (42) has a frame structure (46).

11. Wind stop device as defined in claim 9 or 10, **characterized in that** the supporting device (42) is designed such that its length parallel to the roll bar (12) is variable.

12. Wind stop device as defined in claim 11, **characterized in that** the supporting device (42) has one or more swivel joints (54, 56) for the variation in length.

13. Wind stop device as defined in claim 12, **characterized in that** a swivel joint (54; 56) is arranged at least approximately centrally on a frame structure (46) of the supporting device (42).

14. Wind stop device as defined in any one of claims 9 to 13, **characterized in that** in a securing position (60) of the supporting device (42) this is adapted to be secured on the roll bar (12) in a clamping manner by means of the at least two holding brackets (66a, 66b).

15. Wind stop device as defined in claim 14, **characterized in that** the securing position (60) is located beyond a dead centre with respect to pivoting positions of frame sections (48a, 48b; 50a, 50b) of the supporting device (42) pivotable relative to one another.

16. Wind stop device as defined in claim 14 or 15, **characterized in that** the securing position is adapted to be locked.

17. Wind stop device as defined in claim 16, **characterized in that** for locking the securing position (60) at least one stop element (58; 64) is provided, sections (48a, 48b; 50a, 50b) of a frame structure (46) of the supporting device (42) movable relative to one another being couplable to one another by said stop element so as to be essentially unmovable.

18. Wind stop device as defined in claim 17, **characterized in that** the stop element is designed as a hinged cover flap (58).

19. Wind stop device as defined in claim 17, **characterized in that** the stop element is designed as a sliding stop member (84).

20. Wind stop device as defined in any one of claims 10 to 17, **characterized in that** one or more struts (68a, 68b; 78a, 78b; 82) are arranged between an upper frame section (48a; 48b) and a lower frame section (50a; 50b) of the frame structure (46).

21. Wind stop device as defined in claim 20, **characterized in that** a supporting strut (82) is designed as a swivel shaft of a swivel joint (54; 56) for the variation in length of the supporting device (42).

22. Wind stop device as defined in claim 20 or 21, **characterized in that** supporting struts (78a, 78b) are arranged and designed such that they are located in the area of curved sections (34) of the wind stop device (10) when a wind stop device (10) is mounted.

23. Wind stop device as defined in any one of claims 1 to 8, **characterized in that** the roll bar (12) comprises at least a first and a second spaced curved element (18, 20) and that the supporting device (90) comprises a first supporting structure (92) adapted to be secured on the first curved element (20) and a second supporting structure (94) adapted to be secured on the second curved element (18).

24. Wind stop device as defined in claim 23, **characterized in that** a surface element (96) of the wind stop device for the associated curved element (20; 18) is held by a supporting structure (92; 94).

25. Wind stop device as defined in claim 23 or 24, **characterized in that** a support (120) for surface elements (122) of the wind stop device for the space between the curved elements (18, 20) is adapted to be secured between the first supporting structure (92) and the second supporting structure (94).

26. Wind stop device as defined in claim 25, **characterized in that** the surface element (122) of the wind stop device for the space between the curved elements (18, 20) is of a disk-like design.

27. Wind stop device as defined in any one of claims 23 to 26, **characterized in that** a supporting structure (92; 94) has oppositely located holding brackets (110, 112) for securing it on the associated curved element (20; 18).

28. Wind stop device as defined in claim 27, **characterized in that** a holding bracket (112) is provided with a groove (118) arranged and designed such that a support (120) for surface elements (122) of the wind stop device is insertable.

29. Wind stop device as defined in claim 28, **characterized in that** the groove (118) and the associated support (120) are designed such that the displaceability of the support (120) downwards is limited when a supporting device is mounted on the roll bar (12).

30. Wind stop device as defined in any one of claims 25 to 29, **characterized in that** a locking device is provided for limiting displacement of a mounted support (120) upwards.

31. Wind stop device as defined in any one of claims 25 to 30, **characterized in that** the supporting structures (92, 94) and the support (120) are designed and adapted to be mounted on the roll bar (12) such that the associated surface elements (96, 122) of the wind stop device lie flush in one plane.

## Revendications

1. Pare-vent pour une voiture particulière avec un arceau de sécurité (12), comprenant des éléments plans de pare-vent (70 ; 122) et un dispositif de support (42 ; 90) pour les éléments plans de pare-vent (70 ; 120) qui comprend au moins deux colliers de retenue (66a, 66b ; 110, 112) disposés à distance l'un de l'autre qui sont agencés et conçus de telle manière qu'ils peuvent être fixés dans des segments d'arceau correspondants (32; 34) de l'arceau de sécurité (12) pour la fixation du dispositif de support (42 ; 90), **caractérisé en ce que** les colliers de retenue (66a, 66b ; 110, 112) peuvent être posés sur l'arceau de sécurité (12) et **en ce qu'**un collier de retenue (66a, 66b ; 110, 112) est conçu de telle manière qu'un segment d'arceau correspondant (32 ; 34) peut l'envelopper au moins partiellement.

2. Pare-vent selon la revendication 1, **caractérisé en ce que** la forme d'un collier de retenue (66a, 66b ; 110, 112) est adaptée aux dimensions du segment d'arceau (32; 34) sur lequel il doit être posé.

3. Pare-vent selon l'une quelconque des revendications précédentes, **caractérisé en ce qu'**un collier de retenue (66a, 66b; 110, 112) est conçu en forme de goulotte.

4. Pare-vent selon l'une quelconque des revendications précédentes, **caractérisé en ce qu'**un collier de retenue (66a, 66b; 110, 112) est conçu de manière élastique.

5. Pare-vent selon l'une quelconque des revendications précédentes, **caractérisé en ce qu'**un collier de retenue (66a, 66b ; 110, 112) fait saillie au-dessus d'un plan d'élément plan de pare-vent du dispositif de support (42 ; 90).

6. Pare-vent selon l'une quelconque des revendications précédentes, **caractérisé en ce que** les au moins deux colliers de retenue (66a, 66b ; 110, 112) sont disposés sur les ou à proximité des extrémités latérales opposées du dispositif de support (42 ; 90).

7. Pare-vent selon l'une quelconque des revendications précédentes, **caractérisé en ce que** l'arceau de sécurité comporte un ou plusieurs éléments en arc (18, 20) et **en ce qu'**un collier de retenue (66a, 66b ; 110, 112) est disposé et conçu de telle manière qu'il peut être posé sur un coté intérieur de l'arc d'un segment d'arceau correspondant (32; 34) de l'élément en arc (18, 20).

8. Pare-vent selon la revendication 7, **caractérisé en ce que** les au moins deux colliers de retenue (66a, 66b ; 110, 112) sont disposés à distance l'un de l'autre sur le dispositif de support (42 ; 90) de telle manière qu'ils sont orientés chacun vers l'extérieur en sens inverse dans leur direction verticale plane par rapport à une surface d'appui sur l'arceau de sécurité (12).

9. Pare-vent selon l'une quelconque des revendications précédentes, **caractérisé en ce que** le dispositif de support (42) est conçu en une seule partie.

10. Pare-vent selon la revendication 9, **caractérisé en ce que** le dispositif de support (42) comporte une structure de châssis (46).

11. Pare-vent selon la revendication 9 ou 10, **caractérisé en ce que** le dispositif de support (42) est conçu de telle manière que sa longueur est variable parallèlement à l'arceau de sécurité (12).

12. Pare-vent selon la revendication 11, **caractérisé en ce que** le dispositif de support (42) comporte une ou plusieurs articulations pivotantes (54, 56) pour la variation de longueur.

13. Pare-vent selon la revendication 12, **caractérisé en ce qu'**une articulation pivotante (54, 56) est disposée au moins approximativement sur une structure de châssis (46) du dispositif de support (42).

14. Pare-vent selon l'une quelconque des revendications 9 à 13, **caractérisé en ce que**, dans une position de fixation (60) du dispositif de support (42), ce dernier peut être fixé par serrage à l'arceau de sécurité (12) à l'aide des au moins deux colliers de retenue (66a, 66b).

15. Pare-vent selon la revendication 14, **caractérisé en ce que** la position de fixation (60) se trouve au-delà d'un point mort par rapport aux positions de pivotement de parties de châssis (48a, 48b ; 50a, 50b) du dispositif de support (42) pivotantes l'une par rapport à l'autre.

16. Pare-vent selon la revendication 14 ou 15, **caractérisé en ce que** la position de fixation peut être verrouillée.

17. Pare-vent selon la revendication 16, **caractérisé en ce que**, pour le verrouillage de la position de fixation (60), il est prévu au moins un élément d'encliquetage (58; 64) au moyen duquel des parties mobiles l'une par rapport à l'autre (48a, 48b; 50a, 50b) d'une structure de châssis (46) du dispositif de support (42) peuvent être couplées l'une à l'autre de manière sensiblement stationnaire.

18. Pare-vent selon la revendication 17, **caractérisé en ce que** l'élément d'encliquetage est conçu comme un rabat pivotant (58).

19. Pare-vent selon la revendication 17, **caractérisé en ce que** l'élément d'encliquetage est conçu comme un coulisseau d'encliquetage (84).

20. Pare-vent selon l'une quelconque des revendications 10 à 17, **caractérisé en ce qu'**une ou plusieurs entretoises (68a, 68b ; 78a, 78b ; 82) sont disposées entre une partie supérieure de châssis (48a ; 48b) et une partie inférieure de châssis (50a ; 50b) de la structure de châssis (46).

21. Pare-vent selon la revendication 20, **caractérisé en ce qu'**une entretoise (82) est conçue comme arbre pivotant d'une articulation pivotante (54 ; 56) pour la variation de longueur du dispositif de support (42).

22. Pare-vent selon la revendication 20 ou 21, **caractérisé en ce que** des entretoises d'appui (78a, 78b) sont disposées et conçues de telle manière qu'elles se trouvent dans la zone de segments d'arceau (34) du pare-vent (10) lorsque le pare-vent (10) est monté.

23. Pare-vent selon l'une quelconque des revendications 1 à 8, **caractérisé en ce que** l'arceau de sécurité (12) comporte un premier et un deuxième élément en arc (18, 20) placés à distance l'un de l'autre et **en ce que** le dispositif de support (90) comprend une première structure de support (92) qui peut être fixée au premier élément en arc (20) et une deuxième structure de support (94) qui peut être fixée au deuxième élément en arc (18).

24. Pare-vent selon la revendication 23, **caractérisé en ce qu'**un élément plan de pare-vent (96) pour l'élément en arc associé (20 ; 18) est maintenu par une structure de support (92 ; 94).

25. Pare-vent selon la revendication 23 ou 24, **caractérisé en ce qu'**un support (120) pour des éléments plans de pare-vent (122) pour l'espacement entre les éléments en arc (18, 20) peut être fixé entre la première structure de support (92) et la deuxième structure de support (94).

26. Pare-vent selon la revendication 25, **caractérisé en ce que** l'élément plan de pare-vent (122) pour l'espacement entre les éléments en arc (18, 20) est conçu en forme de vitre.

27. Pare-vent selon l'une quelconque des revendications 23 à 26, **caractérisé en ce qu'**une structure de support (92 ; 94) comporte des colliers de retenue opposés (110, 112) pour sa fixation à l'élément en arc associé (20 ; 18).

28. Pare-vent selon la revendication 27, **caractérisé en ce qu'**un collier de retenue (112) est muni d'une rainure (118) qui est disposée et conçue de telle manière qu'un support (120) pour éléments plans de pare-vent (122) peut être inséré dedans.

29. Pare-vent selon la revendication 28, **caractérisé en ce que** la rainure (118) et le support associé (120) sont conçus de telle manière que la mobilité du support (120) est limitée vers le bas lorsque le dispositif de support est monté sur l'arceau de sécurité (12).

30. Pare-vent selon l'une quelconque des revendications 25 à 29, **caractérisé en ce qu'**il est prévu un dispositif de verrouillage au moyen duquel un déplacement d'un support monté (120) peut être limité vers le haut.

31. Pare-vent selon l'une quelconque des revendications 25 à 30, **caractérisé en ce que** les structures de support (92, 94) et le support (120) sont conçus et peuvent être montés sur l'arceau de sécurité (12) de telle manière que les éléments plans de pare-vent (70 ; 122) associés sont posés de niveau dans une surface.
